# EUROPÄISCHE PATENTSCHRIFT

(11) **EP 1 956 039 B1**
(45) Veröffentlichungstag und Bekanntmachung des Hinweises auf die Patenterteilung: **27.05.2009**
(21) Anmeldenummer: 08100046.5
(22) Anmeldetag: 03.01.2008
(51) Int. Cl.: C08J 3/00, C08L 83/04, B65B 3/12

(54) **Verfahren zur Herstellung von vernetzbaren Massen auf der Basis von Organopolysiloxanen**
Process for producing crosslinkable compositions based on organopolysiloxanes
Procédé pour la fabrication de masses réticoulables à base de organopolysiloxanes

(30) Priorität: 16.01.2007 DE 102007002379
(43) Veröffentlichungstag der Anmeldung: 13.08.2008
(73) Patentinhaber: Wacker Chemie AG, 81737 München (DE)
(72) Erfinder: Schöley, Peter, 01665 Diera-Zehren (DE); Dineiger, Günther, 01662 Meissen (DE); Schulz, Stephan, 01309 Dresden (DE)
(74) Vertreter: Budczinski, Angelika

(56) Entgegenhaltungen:
- EP-A- 0 234 226
- DE-A1- 3 718 948
- DE-A1- 10 020 571

## Beschreibung

Die Erfindung betrifft ein Verfahren zur Herstellung von insbesondere bei Raumtemperatur vernetzbaren Organopolysiloxanmassen, bei dem die Organopolysiloxanmassen vor deren Abfüllung in feuchtigkeitsdichte Gebinde in einem Zwischenbehälter gespeichert werden.

Einkomponentige Organopolysiloxanmassen, die unter Ausschluss von Feuchtigkeit lagerfähig sind und unter Zutritt von Feuchtigkeit bei Raumtemperatur vernetzen, sog. RTV1-Dichtmassen, sind bereits seit langem bekannt.

Für die Herstellung von standfesten RTV1-Dichtmassen sind verschiedene Verfahren beschrieben. Wegen der hohen Produktivität sind kontinuierliche Verfahren bevorzugt.

So werden beispielsweise nach EP-B-234 226 in einem ersten Schritt ein Teil der Bestandteile in einem kontinuierlich arbeitenden geschlossenen Mischer vereinigt. In einem zweiten Schritt werden weitere Bestandteile in einem oszillierenden Pilgerschrittkneter zudosiert. Gleichzeitig wird die Masse in diesem Kneter homogenisiert und entgast sowie anschließend in Fässer, Tuben und Kartuschen abgefüllt.

EP-B-512 730 beschreibt ein Verfahren, bei dem ein Schneckenextruder mit verschiedenen Mischzonen verwendet wird. Nach dem fertigen Compoundieren wird die RTV1-Dichtmasse in Behälter wie Kartuschen oder Fässer gefüllt.

Die Verwendung eines Mischaggregates mit rotierender Scheibe wird in EP-B-739 652 offenbart. Nach dem Vermischen der Bestandteile werden in einem nachgelagerten Schritt in einer Vakuumapparatur noch vorhandenes Wasser und flüchtige Substanzen entfernt. Daran anschließend füllt man die Massen in Aluminiumkartuschen ab.

In EP-A-1 008 613 wird die Verwendung einer Mischturbine mit axialem Fluss beschrieben, in der alle Mischungsbestandteile in einem Schritt vermischt werden. Nach der Entgasung wird die fertige Mischung in Hobbocks, Fässer, Großbehälter oder Kartuschen gefüllt.

Die bekannten kontinuierlich arbeitenden Verfahren stellen über einen langen Zeitraum konstante Mengen von RTV1-Dichtmassen pro Zeiteinheit bereit. Am Ende der jeweiligen kontinuierlichen Verfahren werden die Dichtmassen in feuchtigkeitsdichte Gebinde abgefüllt. In der Regel erfolgt dabei zunächst die Abfüllung in Fässer oder in offene Gefäße, wie Kübel. Anschließend werden die RTV1-Dichtmassen in räumlicher Nähe oder nach längerem Transport in anwendungsfertige feuchtigkeitsdichte Gebinde verpackt, wie Tuben, Kartuschen oder Schlauchbeutel. Diese Abfüllprozesse weisen meist erhebliche Probleme auf, denn die hochviskosen RTV1-Dichtmassen sind standfest und hydrolyseempfindlich.

Da sich aus wirtschaftlicher Sicht auch kontinuierlich arbeitende Anlagen mit einem vergleichsweise geringen Durchsatz von einigen 100 Kilogramm pro Stunde lohnen, kommt es häufig zu sehr langen Abfüllzeiten beim Abfüllen in größere, offene Zwischenbehälter, wie Kübel oder Fässer. Während dieser Zeit sind die RTV1-Dichtmassen nicht ausreichend gegen Einwirkung von Feuchtigkeit geschützt. Auch technische Maßnahmen, wie Beschleierung der Abfüllanlage mit trocknener Luft, können den Zutritt von Feuchtigkeit oft nur unzureichend reduzieren.

Bekannt ist weiterhin die Nutzung von bestimmten Vorrichtungen bei der kontinuierlichen Herstellung von Flüssigkeiten, die Mengenschwankungen zwischen hergestellten und verarbeiteten Produktmengen ausgleichen. Prinzipiell ist die Installation solcher Pufferbehälter nur bei störanfälligen Produktionsprozessen mit starken Schwankungen der Produktionsmengen vorteilhaft. Eine solche Vorrichtung zur Vergleichmäßigung des Mengenstromes von selbstfließenden Flüssigkeiten zwischen kontinuierlicher Produktion und nachgeschalteten, im Wesentlichen kontinuierlich arbeitenden Verarbeitungsanlagen wird beispielsweise in DE-A-100 20 571 beschrieben.

DE-A- 37 18 948 offenbart einen mit einer Pressplatte versehenen Behälter, welcher zum diskontinuierlichen Abfüllen von anwendungsfertigen Spritzenzylindern mit Dichtmassen aus Silikon-Kautschuk verwendet wird.

Außerdem sind zur dauerhaften Vermeidung von nachteiligen Überkapazitäten die kontinuierliche Herstellung und der kontinuierliche Verbrauch von Produktmengen je Zeiteinheit sorgfältig in Übereinstimmung zu bringen. Die im Falle der Entleerung des Pufferbehälters bereitzustellende notwendige Produktmenge je Zeiteinheit entspricht dadurch exakt der kontinuierlich anfallenden Produktionsmenge der kontinuierlichen Herstellanlage. Das heißt, bei einem Ausfall der Herstellanlage muss der Pufferbehälter nur die Produktmenge je Zeiteinheit bereitstellen, die die Herstellanlage produziert hätte.

Bei Abfüllprozessen von RTV1-Dichtmassen ist es jedoch so, dass diskontinuierlich große Produktmengen in kurzen Zeitabschnitten gefördert werden müssen. Einfache Pufferbehälter sind somit zur schnellen Abfüllung großer Produktmengen nicht geeignet.

Gegenstand der Erfindung ist ein Verfahren zur Herstellung von vernetzbaren Massen auf der Basis von Organopolysiloxanen durch Vermischen der einzelnen Bestandteile, dadurch gekennzeichnet, dass die Mischung (1) kontinuierlich durch eine Zuleitung einem mit mindestens einer Pressplatte versehenen Speicher zugeführt wird, wobei der Speicher eine Speicherkapazität von mindestens 15 Minuten der kontinuierlich zugeführten Mischung (1) hat sowie der im Wesentlichen totraumfreie Speicher beim Befüllen dauerhaft einen Innendruck von mehr als 1200 hPa aufweist, und über einen Austrag weiteren Behältern zugeführt wird.

Bei den Mischungen (1) handelt es sich bevorzugt um bei Raumtemperatur durch Kondensationsreaktion vernetzbare Massen, sogenannte RTV1-Massen, die bevorzugt unter Verwendung von kondensationsfähige Gruppen aufweisenden Siloxanen, Vernetzern, Katalysatoren und gegebenenfalls weiteren Stoffen zubereitet werden können. Ausgangsstoffe und Verfahren zur Zubereitung solcher Massen (1) sind bereits vielfach bekannt. Hierzu sei beispielsweise auf EP-B-512 730 und EP-B-1 397 428 verwiesen, die zum Offenbarungsgehalt der vorliegenden Erfindung zu zählen ist.

So können die Mischungen (1) gemäß ihrer Rezeptur in beliebigen, bevorzugt kontinuierlich arbeitenden Anlagen zubereitet werden, wie zum Beispiel mit Hilfe von Zweischneckenextruder, Pilgerschrittkneter oder Mischaggregate mit Rotor/Stator-System. Dabei können auch mehrere Aggregate hintereinander oder parallel angeordnet sein. Bevorzugt werden bei dem erfindungsgemäßen Verfahren die Massen (1) direkt nach ihrer Zubereitung vor dem Eintrag in den Speicher mit an sich bekannten Maschinen wie beispielsweise Zweischneckenextruder, Zweiwellen-Kneter oder Pilgerschrittkneter entflüchtigt und entgast. Dies sichert die volle Nutzung der Speicherkapazität des Speichers, ermöglicht eine problemlose Förderung der Masse und bereitet schon die notwendige blasenfreie Abfüllung in die Gebinde vor.

Im erfindungsgemäßen Verfahren sind die Mischungen (1) mit Viskositäten von bevorzugt über 10 Pa·s sehr hochviskos (gemessen bei 25°C und einem Schergefälle von 1,0 s⁻¹) und bevorzugt standfest (kein Herauslaufen aus senkrecht aufgehängten Aluminiumprofilen entsprechend ISO 7390).

Die Dichte der Mischungen (1) beträgt bevorzugt 0,9 bis 1,5 g/cm³ bei 25°C.

Selbstverständlich ist auch die Zubereitung der Mischungen (1) in diskontinuierlich arbeitenden Anlagen möglich, doch ergeben sich daraus nur sehr geringe technologische Vorteile. Dies wäre zum Beispiel der Fall, wenn mehrere kleine Chargen in dem Speicher zu einer größeren Charge vereinheitlicht werden könnten.

Bei dem erfindungsgemäßen Verfahren werden die bevorzugt kontinuierlich zubereiteten Mischungen (1) kontinuierlich in geschlossenen Leitungssystemen dem Speicher zugeführt, bevorzugt mit Hilfe einer Fördereinrichtung.

Zur Förderung können alle bekannten druckaufbauenden Aggregate, wie Extruder oder Pumpen, verwendet werden. Gegebenenfalls kann auf Fördereinrichtungen verzichtet werden, wenn der Druck an der Austragsöffnung der Vorrichtung zur kontinuierlichen Zubereitung bzw. an der Entgasungsvorrichtung groß genug ist, um die Mischung (1) in den Speicher zu fördern.

Die Mischungen (1) sind bei den auftretenden Förderdrücken als nicht komprimierbar anzusehen. Deswegen sind die Leitungssysteme bevorzugt so konstruiert, dass sie bei den auftretenden Förderdrücken im Wesentlichen volumenkonstant sind. Bevorzugt sind die erfindungsgemäß verwendeten Leitungen aus hochlegierten, korrosionsbeständigen Stählen angefertig, wie zum Beispiel Stahl der Werkstoffnummer 1.4301 oder, was besonders bevorzugt ist, Stahl der Werkstoffnummer 1.4571 entsprechend der DIN 17007.

Oftmals ist es sinnvoll Siebe in die Förderleitung einzubauen, wie zum Beispiel sogenannte Strainer. Damit können gegebenenfalls vorhandene größere Füllstoffteilchen oder grobe Verunreinigungen aus dem Mischgut entfernt werden, die zu einer mechanischen Beschädigung des Speichers führen könnten.

Der im erfindungsgemäßen Verfahren eingesetzte Speicher ist bevorzugt auspressbar, mechanisch stabil sowie luft- und feuchtigkeitsdicht abgeschlossen. Die erfindungsgemäße Ausführungsform des Speichers in mechanisch stabiler Bauart bedeutet, dass Werkstoffe, wie Stahl oder Aluminium, bevorzugt sind. Möglich sind auch Versteifungen beispielsweise aus Beton. Ziel der mechanisch stabilen Ausführungsform sind der Ausschluss von Luftfeuchtigkeit, da eindringende Luftfeuchtigkeit Produktschädigungen bewirken würde, die Absicherung einer hohen Restentleerung, die bei Produktwechsel notwendig ist, und ein hoher Widerstand der Vorrichtung bei den notwendigen Auspressdrücken gegen Produktauslauf und Verformung des Speichers.

Der erfindungsgemäß eingesetzte Speicher kann jede beliebige geometrische Form aufweisen, bevorzugt werden ebene, rechteckige, runde oder ovale Grundflächen. Besonders bevorzugt werden kreisrunde Querschnitte.

Bevorzugt ist weiterhin, dass Boden und Deckel des Speichers gleich groß und gleich geformt sind, denn dadurch kann der Speicher sehr gut restentleert werden. Besonders bevorzugt ist eine zylindrische Form, wobei mindestens eine Abdeckung als bewegliche Pressplatte ausgeführt ist, denn die Pressplatten gewährleisten die notwendige Festigkeit gegen Verformung und gute Abdichtung gegen die Innenwand.

Des Weiteren werden innere Maße des Speichers bevorzugt, die ein geringes Oberflächen zu Speichervolumen - Verhältnis gewährleisten. Das heißt, der Speicher sollte beispielsweise bei zylindrischer Form weder dünn und lang noch breit und flach sein. Bevorzugt hat der Quotient aus Länge und Durchmesser des erfindungsgemäß eingesetzten Speichers Werte von 0,2 bis 5, besonders bevorzugt von 0,5 bis 2.

Die Abdichtung zwischen Pressplatte und Speicherinnenwand sollte möglichst dicht sein, um Produktaustritt und Luftfeuchtigkeitszutritt zu verhindern. Bevorzugt wird dabei eine Ausführungsform des erfindungsgemäß eingesetzten Speichers, bei der eine Sperrflüssigkeit, die besonders bevorzugt ein Siliconöl ist, zwischen zwei runde oder ovale Dichtungen, bevorzugt Gummidichtungen, gedrückt wird. Die Gummidichtungen befinden sich jeweils am äußeren Umfang der Pressplatte zwischen Pressplatte und Innenwandung, wobei eine im unteren Teil der Pressplatte zum Produkt hin und die zweite im oberen Teil der Pressplatte zur Umwelt hin angeordnet ist, und beide fest gegen die Innenwandung des Speichers gepresst sind, wobei 2 Nuten in der äußeren Umrandung der Pressplatte die mechanische Fixierung der Gummidichtungen erleichtern können.

Die Dichtungen sind bevorzugt so gewählt, dass sie den thermischen und chemischen Belastungen standhalten, das heißt, dass sie insbesondere beständig sind gegen die Bestandteile der Mischungen (1), wie Weichmacher, Vernetzer oder Additive, sowie gegenüber den Hydrolyseprodukten der vernetzbaren Masse (1) wie Alkohole, Ketoxime oder Essigsäure. Zusätzlich kann die Pressplatte im Bereich des Umfangs mit sogenannten Abstreifer versehen sein, welche bevorzugt aus Wolframcarbid-beschichtetem Stahl bestehen und ringförmig an der Innenwandung anliegen, wobei sie beim Entleeren des Speichers die vernetzbare Masse (1) von der Innenwandung entfernen und dadurch die Gummidichtungen schonen.

Auch die Innenwandung des im erfindungsgemäßen Verfahrens eingesetzten Speichers ist bevorzugt mit einer verschleißfesten speziellen Beschichtung versehen. So wird bevorzugt bei der Verwendung von Stahl als Material des Speichers eine Innenschicht aus Wolframcarbid aufgebracht, was eine hohe Beständigkeit und eine hohe Dichtheit der Speichervorrichtung über mehrere Monate bis Jahre gewährleistet.

Zusätzlich zum Eigengewicht der Pressplatte und zum hydrostatischen Druck der vernetzbaren Masse (1) können, was bevorzugt ist, Einrichtungen zur Druckerhöhung angeordnet sein. Die Druckübertragung auf die Pressplatte kann technisch beliebig mit druck- oder krafterzeugenden Vorrichtungen erfolgen, wie zum Beispiel hydraulischen, pneumatischen oder mechanischen Anlagen. Bevorzugt werden hydraulisch betriebene Pressplatten, da diese eine sehr gute Steuerbarkeit gewährleisten und bei geringer Masse sehr hohe Drücke erzeugen können.

Beim erfindungsgemäßen Verfahren ist der Innendruck des im Wesentlichen totraumfreien Speichers beim Befüllen dauerhaft mindestens 1200 hPa, bevorzugt mindestens 1500 hPa, besonders bevorzugt 1500 bis 10000 hPa.

Beim erfindungsgemäßen Verfahren ist der Innendruck des im Wesentlichen totraumfreien Speichers beim Entleeren bevorzugt 2500 bis 50000 hPa, besonders bevorzugt 3000 bis 20000 hPa. Die Anwendung höherer Drücke ist jeweils möglich, technisch aber nicht sinnvoll.

Unter Toträumen werden Volumenelemente im Speicherraum zwischen Press- und Bodenplatte verstanden, die nicht mit vernetzbarer Masse (1) gefüllt sind, sondern beispielsweise Gaseinschlüsse sind. Im Rahmen der vorliegenden Erfindung soll unter der Bezeichnung "im Wesentlichen totraumfrei" auch die Anwesenheit von Gaseinschlüssen in untergeordnetem Maße, die im technischen Betrieb nie vollständig auszuschließen sind, verstanden werden, wobei der Anteil an Volumenelementen Gas bevorzugt maximal 10 Vol.-%, besonders bevorzugt maximal 5 Vol.-%, insbesondere maximal 1 Vol.-%, jeweils bezogen auf die Volumenelemente der Mischung (1) im Speicher, beträgt.

Dabei sind die Drücke erfindungsgemäß jeweils so gewählt, dass bei der Entleerung sehr große Volumenströme möglich sind. Insbesondere ist es bevorzugt, dass bei der erfindungsgemäßen kurzzeitigen, diskontinuierlichen Entleerung höhere Volumenströme erreicht werden, als durch die kontinuierliche Zubereitungsanlage pro Zeiteinheit zugeführt werden können, denn dies ermöglicht beispielsweise bei der Abfüllung von Fässern kürzere Abfüllzeiten.

Sollte der Druck im Speicher größer sein als der Druck an vorgeschalteten Aggregaten, so kann das Zurückströmen der vernetzbaren Masse in den Einlass durch entsprechende technische Maßnahmen, wie z.B. Rückschlagklappen, verhindert werden.

Bevorzugt kann die Speichervorrichtung vor der ersten Befüllung auch evakuiert werden, wobei das Evakuieren erfolgt, wenn die Pressplatte und die Bodenplatte möglichst dicht aneinanderliegen. Dies ist beispielsweise dann vorteilhaft, wenn nach einer Reinigung der Speichervorrichtung die erstmalige Befüllung ohne das Entstehen von gasförmigen Toträumen erfolgen soll. Bevorzugt ist der Innenraum des Speichers evakuierbar bis zu einem Druck von weniger als 100 hPa und besonders bevorzugt bis zu einem Druck von weniger als 20 hPa.

Bei dem erfindungsgemäßen Verfahren wird bevorzugt die Bewegung der Pressplatte durch seitliche Führungen unterstützt werden.

Bevorzugt ist der Boden des Speichers mechanisch fixiert und die Pressplatte als beweglicher Deckel ausgeführt. Weitere mögliche Varianten sind ein beweglicher Boden und ein fest stehender Deckel oder sowohl beweglicher Deckel als auch ein beweglicher Boden.

Außer den vertikalen Auspressrichtungen, die bevorzugt sind, sind auch horizontale oder beliebige andere Bewegungsrichtungen zum Auspressen möglich.

Der im erfindungsgemäßen Verfahren eingesetzte Speicher kann im betrieblichen Ablauf bevorzugt bis zu weniger als 10 % seines Volumens, besonders bevorzugt weniger als 5 % und ganz besonders bevorzugt 1 bis 2 % seines Volumens, restentleert werden. Dabei wird das Restvolumen aus Gründen der Sicherheit so groß belassen, um ein Zusammenpressen von Pressplatte und Bodenplatte zu vermeiden. Technisch möglich ist es durchaus, beispielsweise wegen Reinigungsarbeiten, das Restvolumen auf weniger als 0,5 % des Speichervolumens zu verringern. Bevorzugt wird die Stellung der Pressplatte messtechnisch erfasst, wobei ein oberer Punkt die Befüllung steuerungstechnisch beendet und ein unterer Punkt die Entleerung. Zusätzlich können noch mechanische Sicherungen angebracht sein, die die Bewegung der Pressplatte nach unten und nach oben begrenzen.

Bevorzugt sind die Anlagenteile zur Kraftübertragung und Pressplattenführung außerhalb der Speichervorrichtung angeordnet. Es ist aber auch sehr gut möglich, beispielsweise die Pressplattenführung axial oder achsparallel durch den Speicher zu führen, was aus Gründen der Dichtheit allerdings technisch aufwändiger wäre.

Die Speichervorrichtung kann mit mehreren Ein- und Auslassöffnungen versehen sein, die an beliebiger Stelle angeordnet sein können, wie zum Beispiel in der feststehenden Bodenplatte oder der beweglichen Pressplatte. Bevorzugt sind die Öffnungen in der Bodenplatte nach dem unteren Endpunkt der Pressplatte angeordnet. Bevorzugt weist die Speichervorrichtung eine im Mittelpunkt der bevorzugt kreisrunden Bodenplatte angeordnete Öffnung auf, deren Größe bevorzugt kleiner als 0,1 % der Fläche der Bodenplatte ist, wobei diese je nach Betriebszustand beim Befüllen als Einlassöffung und beim Entleeren als Auslassöffnung dient. Unterhalb der Bodenplatte ist die Zuleitung dann mit einem T-förmigen Leitungsstück versehen, wodurch einerseits die Zuleitung des vernetzbaren Materials möglich ist und andererseits die Entleerung der Speichervorrichtung zur Abfüllung hin gegeben ist. Möglich ist jedoch auch, falls erwünscht, weitere Öffnungen in der Bodenplatte, beispielsweise als Auslässe für zusätzliche Abfüllvorrichtungen anzuordnen.

Der Volumenstrom durch den Einlass in den Speicher, also die Zubereitungsmenge der vernetzbaren Masse (1), beträgt bevorzugt mehr als 200 Liter je Stunde, besonders bevorzugt 500 bis 5000 Liter je Stunde, insbesondere 800 bis 3000 Liter je Stunde.

Der erfindungsgemäß eingesetzte Speicher hat eine Speicherkapazität bevorzugt mindestens 30 Minuten der kontinuierlich zugeführten Masse (1), besonders bevorzugt 45 bis 300 Minuten.

Daraus ergeben sich bevorzugte Volumina der Speichereinrichtung von bevorzugt über 100 Litern, besonders bevorzugt von über 600 Liter und ganz besonders bevorzugt von 900 bis 6000 Liter.

Bei den weiteren Behältern, denen erfindungsgemäß die vernetzbare Masse aus dem Speicher zugeführt wird, handelt es sich bevorzugt um Fässer, Kübel, sog. Fluid-Bags und Kartuschen.

Bei dem erfindungsgemäßen Verfahren kann die Abfüllung in offene Behälter unter Beschleierung mit trockener Luft oder mit trockenem Schutzgas, wie zum Beispiel Stickstoff, durchgeführt werden.

Das erfindungsgemäße Verfahren kann bei beliebigen Temperaturen durchgeführt werden; bevorzugt sind Speichertemperaturen von 5 bis 130°C, besonders bevorzugt von 10 bis 90°C, insbesondere von 20 bis 50°C, oder bei Temperaturen, wie sie sich bei der Durchführung des Verfahrens ergeben.

Bei dem erfindungsgemäß eingesetzten Speicher kann es sich in einer möglichen Ausführungsform um ein Doppelmantelgefäß handeln, wobei die vernetzbaren Massen gekühlt oder beheizt werden können. Dabei können auch Boden und Deckel mit doppeltem Mantel versehen sein. Bevorzugt sind Speicher ohne Temperierung und beheizbare Speicher, wobei Speicher ohne Temperierung ganz besonders bevorzugt sind.

Weiterhin möglich, aber nicht bevorzugt, ist die Ausrüstung des Speichers mit Aggregaten zum Rühren oder zum Umpumpen der vernetzbaren Masse, wobei gegebenenfalls weitere Bestandteile eingemischt werden können.

Da bei dem erfindungsgemäßen Verfahren die vernetzbare Masse im Speicher keinen Reifeprozessen unterliegt, ist es nicht wesentlich, zu welchem Zeitpunkt der Befüllung Material in den Speicher gefördert wird und zu welchem Zeitpunkt dieses Material ausgepresst wird. Es gilt also nicht das first-in/first-out-Prinzip.

Bei einer bevorzugten Ausführungsform des erfindungsgemäßen Verfahrens wird die vernetzbare Mischung (1) durch den Druck der vorangehenden Zubereitungsanlage und gegebenenfalls durch den Druck von zusätzlichen Förderanlagen durch die Einlassöffnung in die evakuierte Speichervorrichtung gedrückt, wobei sich die Pressplatte bevorzugt in Bodennähe befindet und die Förderleitung zu Abfüllvorrichtungen geschlossen sind. Die in den Speicher eintretende vernetzbare Masse füllt den Raum zwischen Boden und Pressplatte. Anschließend wird die Pressplatte durch weitere Massenzufuhr zurückgedrängt, das heißt der Förderdruck der eintretenden vernetzbaren Masse ist ständig größer als der Druck der Pressplatte. Zur Vermeidung von Toträumen, Lufteinschlüssen und eindringender Luftfeuchtigkeit oder ähnlichem ist der Innendruck des Speichers jedoch ständig höher als der Druck der umgebenden Atmosphäre.

Die Entleerung kann zu jeder Zeit unabhängig vom konkreten Füllvolumen begonnen werden. Dazu wird nach dem Öffnen des Auslasses, bevorzugt der Absperrvorrichtung in der Leitung zur Abfüllvorrichtung, vorzugsweise der Auspressdruck über die Hydraulikvorrichtung soweit erhöht, dass eine Förderung der vernetzbaren Masse durch den Auslass zur Abfüllvorrichtung erfolgt.

Bei dem erfindungsgemäßen Verfahren erfolgt die Entleerung des Speichers bevorzugt mit mehr als 1000 Litern je Stunde und besonders bevorzugt mit mehr als 1500 Liter je Stunde. Der Volumenstrom der erfindungsgemäßen Entleerung ist bevorzugt um den Faktor 1,1, besonders bevorzugt mindestens um den Faktor 1,2 und ganz besonders bevorzugt mindestens um den Faktor 1,5, größer als der Volumenstrom der Mischung (1).

Bei einer bevorzugten Ausführungsform des erfindungsgemäßen Verfahrens bleibt die kontinuierliche Anlage zur Zubereitung der Mischungen (1) während der Entleerung weiter in Betrieb. Damit ist es möglich, sowohl Produkt aus dieser Zubereitungsanlage als auch aus dem Speicher gleichzeitig abzufüllen.

In einer besonders bevorzugten Ausführungsform kann kontinuierlich zubereitete vernetzbare Masse (1) gleichzeitig zu mehreren Abfüllvorrichtungen oder Anlagen zur Weiterverarbeitung gefördert werden. So können beispielsweise an einer Abfüllvorrichtung Fässer abgefüllt werden und gleichzeitig kann vernetzbare Masse (1) ohne weiteren Zwischenspeicher über eine direkte Anbindung zu einer Anlage gefördert werden, an der z.B. Kartuschen abgefüllt werden.

Wenn eine der Abfüllvorrichtungen weit von der der Speichervorrichtung entfernt ist, werden bevorzugt zusätzliche Fördereinrichtungen installiert. Üblicherweise sind dies beispielsweise Zahnradpumpen, die einen gewissen Vordruck des Fördergutes benötigen, beispielsweise ca. 1500 hPa, da sie nicht selbst ansaugend sind. In diesem Fall gewährleistet die Speichervorrichtung einen solchen Vordruck erfindungsgemäß auch dann, wenn beispielsweise mit der Abfüllung von Großgebinden begonnen wird.

Beim erfindungsgemäßen Entleeren der Speichervorrichtung können nach der Entleerung des Speichers und vor der Abfüllung weitere flüssige oder pastöse Substanzen in die vernetzbare Masse eingemischt werden. So können beispielsweise bevorzugt mit Hilfe von statischen oder dynamischen Mischern im Leitungssystem flüssiger Rheologieadditive oder Fungizide beziehungsweise angepastete Pigmente, wie zum Beispiel Farbpigment oder Hitzestabilisatoren, eingemischt werden.

Die erfindungsgemäße Abfüllung der im Speicher befindlichen Masse in weitere Behälter erfolgt bevorzugt im freien Fall aus Rohr- oder Schlauchleitungen, wobei die Strecke bis zum Auftreffen auf den Boden des Gefäßes möglichst kurz gehalten wird. So können zum Beispiel Vorrichtungen installiert sein, die ein Heben und Senken des Gebindes, in das abgefüllt werden soll, oder ein Heben und Senken des Endes der Dosiervorrichtung bewirken.

Das erfindungsgemäße Verfahren hat den Vorteil, dass es nach der kontinuierlichen Zubereitung von vernetzbaren Massen nicht nur sehr schnelle Abfüllvorgänge in Großgebinde zulässt und auch die permanente Weiterförderung der Masse in unterschiedlich großen Volumina gewährleistet, sondern alle Prozesse gleichzeitig und unabhängig voneinander durchgeführt werden können.

Des Weiteren hat das erfindungsgemäße Verfahren den Vorteil, dass bei Rezepturumstellungen keine oder nur minimale Mengen an Zwischenprodukten anfallen.

Das erfindungsgemäße Verfahren hat auch den Vorteil, dass es über längere Zeiträume, wie mehrere Wochen und Monate, ohne Unterbrechung betrieben werden kann, wodurch die zeitliche Auslastung der Anlagen sehr hoch ist.

Zusätzlich hat das erfindungsgemäße Verfahren den Vorteil, dass die Abfüllung in Kleingebinde wie Kartuschen oder Schlauchbeutel im geschlossenen System direkt möglich ist. Dadurch wird eine Schädigung des Produktes wegen Luftzutritt bei Umfüllvorgängen vermieden. Außerdem fallen keine Restmengen an, die beim Umfüllen in Zwischengebinde, wie Fässer oder Kübel, entstehen.

Weiterhin hat das erfindungsgemäße Verfahren den Vorteil, dass es in der Speichervorrichtung nicht zu vorzeitigen Produktaushärtungen kommen kann.

Ein weiterer Vorteil des erfindungsgemäßen Verfahrens besteht darin, dass sehr leicht offene Gebinde, wie Fässer, blasenfrei abgefüllt werden können.

In den nachfolgenden Beispielen werden, sofern nicht anders angegeben, bei einem Druck der umgebenden Atmosphäre, also bei etwa 1000 hPa, und bei Raumtemperatur, also etwa 20°C, durchgeführt.

### Beispiel 1

In einem kontinuierlich arbeitenden Zweischneckenextruder wurden 800 Liter/Stunde einer transparenten, feuchtigkeitsempfindlichen und standfesten RTV1-Dichtmasse mit einer Dichte von ca. 1,0 g/cm³, die unter Abspaltung von Essigsäure aushärtet, zubereitet (Mischung aus 66,95 Gew.-% eines Polydimethylsiloxans, das Diacetoxymethylsilylendgruppen und Diacetoxyviylsilylendgruppen im Verhältnis 1:2 aufwies, mit einer Viskosität von 80000 mPas, 22,0 Gew.-% eines (α,ω)-Bis-trimethylsiloxypolydimethylsiloxans mit einer Viskosität von 1000 mPas, 4,5 Gew.-% eines Gemisches aus Acetoxysilanen, 0,05 Gew.-% einer Mischung aus 20 Gew.-% Dibutylzinndiacetat und 80 Gew.-% organischem Weichmacher sowie 6,5 Gew.-% einer pyrogenen Kieselsäure mit einer BET-Oberfläche von 150 m²/g). Die RTV1-Dichtmasse wurde anschließend kontinuierlich auf ca. 40°C abgekühlt und mit Hilfe einer Zahnradpumpe durch ein geschlossenes Leitungssystem mit einem Druck von 5000 hPa von unten über die Bodenöffnung in eine leere Speichervorrichtung gedrückt.

Die RTV1-Dichtmasse mit einer Temperatur von 40°C bildete an der Luft bei einer Luftfeuchtigkeit von ca. 50 % innerhalb von 10 Minuten eine Haut.

Die Pressplatte der aufrecht stehenden zylindrischen Speichervorrichtung befand sich bei einem Gesamt-Arbeitshub von ca. 90 cm in der untersten Position. Pressplatte und Bodenplatte, die jeweils einen Durchmesser von ca. 130 cm aufwiesen, waren parallel zueinander mit einem Abstand von ca. 1,5 cm voneinander angeordnet. Das direkte Aufeinanderliegen wurde vermieden, da es auch den Beginn des Befüllens stark erschwert hätte.

Durch Evakuieren herrschte im Restvolumen der Speichervorrichtung ein Druck von ca. 50 mbar.

Die Speichervorrichtung, die ein Gesamt-Arbeitsvolumen von ca. 1200 Liter aufwies, wurde über eine Stunde mit Dichtmasse befüllt, sodass der Speicher mit 800 Litern gefüllt war, wobei im Inneren der Speichervorrichtung ein Druck von 3000 hPa herrschte.

Der Innenraum und die zylindrische Innenwandung und der ringförmige Abstreifer waren mit Wolframcarbid beschichtet. Zusätzlich war der Raum zwischen Pressplatte und Innenwandung mit Runddichtungen aus Silicongummi abgedichtet, zwischen denen ein Siliconöl von ca. 100 mPa·s als Sperrflüssigkeit zirkulierte. Achsparallel zur Auspressrichtung war ein Führungsrohr außerhalb der Speichervorrichtung zur Stabilisierung der Pressplatte angebracht. Insgesamt erforderte die Speichervorrichtung einen Stellplatz von ca. 2 mal 3 Meter.

Nach 60 Minuten wurde zum Auspressen der RTV1-Dichtmasse der Druck mit einem Hydraulikaggregat auf die Pressplatte so erhöht, dass in der Speichervorrichtung ein Druck von 10000 hPa herrschte.

Über ein geschlossenes Leitungssystem, das einen Innendurchmesser von 8,0 Zentimeter hatte, wurde die RTV1-Dichtmasse von der Speichervorrichtung zur Abfüllstation über eine Strecke von ca. 7 Metern gefördert, bei der Fässer gefüllt wurden, indem die RTV1-Dichtmasse im freien Fall von oben in die Fässer geleitet wurde. Dabei wurde sowohl Produkt aus der Speichervorrichtung als auch aus der Herstellanlage abgefüllt, denn während des Auspressens aus dem Speicher wurde die kontinuierliche Herstellanlage weiter betrieben, sodass sich ein Gesamtmengenstrom ergab als Summe aus Herstellmenge und Auspressmenge. Die Temperatur der RTV1-Dichtmasse betrug 39°C.

Es konnten in 30 Minuten 6 Fässer von je 200 Litern Inhalt befüllt werden, wobei 800 Liter aus dem Speicher bereitgestellt wurden und 400 Liter während dieser Zeit neu hergestellt wurden. Das heißt, je Fass wurde eine Abfüllzeit von 5 Minuten benötigt.

Ohne Speichervorrichtung wären für jedes Fass 15 Minuten benötigt worden. Während dieser 15 Minuten könnte nicht sicher vermieden werden, das Teile der RTV1-Dichtmasse ständig in Kontakt zur Luft stehen, was zur beginnenden Aushärtung und zur Bildung einer Haut führen würde. Mit einer Abfüllzeit von 5 Minuten wurde die Schädigung der RTV1-Dichtmasse vollständig und sicher vermieden, denn die Abfüllzeit war kürzer als die Hautbildungszeit.
Weiterhin war die Abfüllung blasenfrei, denn der große Volumenstrom verteilte sich gleichmäßig aus der Mitte in die Seitenbereiche der Fässer.

### Beispiel 2

Beispiel 1 wurde wiederholt mit der Abänderung, dass das transparente Ausgangsmaterial zwischen Speicher und Abfüllung mit Hilfe eines statischen Mischers im Leitungssystem mit ca. 1,5 Gew.-% einer weißen Farbpaste weiß eingefärbt wurde, was keinerlei Auswirkungen auf die Hautbildungszeit von 10 Minuten hatte.
Es konnten wieder in 30 Minuten 6 Fässer von je 200 Litern Inhalt befüllt werden. Die Abfüllzeit war kürzer als die Hautbildungszeit. Eine mögliche Produktschädigung konnte vollständig vermieden werden.
Weiterhin war die Abfüllung blasenfrei, denn der große Volumenstrom verteilte sich gleichmäßig aus der Mitte in die Seitenbereiche der Fässer.

### Beispiel 3

In einem kontinuierlich arbeitenden Zweischneckenextruder wurden 1200 Liter/Stunde einer feuchtigkeitsempfindlichen und standfesten RTV1-Dichtmasse mit einer Dichte von ca. 1,0 g/cm³, die unter Abspaltung von Essigsäure aushärtet, zubereitet. Die RTV1-Dichtmasse wurde anschließend kontinuierlich auf ca. 40°C abgekühlt.

Die Hautbildungszeit der etwa 40 °C warmen RTV1-Dichtmasse betrug ca. 10 Minuten.

Über eine direkte Leitung zu einer Kartuschenabfüllanlage wurden gleichmäßig über 24 Stunden jeweils 1000 Liter je Stunde der RTV1-Dichtmasse abgefüllt.

Eine Menge von 200 Litern je Stunde wurde mit Hilfe eines T-förmigen Stückes in der Rohrleitung über die Bodenöffnung in die leere Speichervorrichtung, die in Beispiel 1 beschrieben ist, gedrückt.

Nachdem die Speichervorrichtung mit 800 Litern gefüllt war, also nach jeweils etwa 4 Stunden, wurde gleichzeitig zur Kartuschenabfüllung der Inhalt der Pufferpresse über eine weitere Bodenöffnung in Fässer entleert, wobei mit 1600 Litern je Stunde entleert wurde.
Jeweils innerhalb von 30 Minuten konnten 4 200-1-Fässer gefüllt werden. Damit war die Abfüllzeiten wieder kürzer als die Hautbildungszeit.

### Vergleichsbeispiel 1

Beispiel 3 wurde wiederholt mit der Abänderung, dass neben der ständig betriebenen Kartuschenabfüllung innerhalb von jeweils einer Stunde 1 Fass befüllt wurde. Dabei konnten Schädigungen der RTV1-Dichtmasse durch Luftfeuchtigkeit nicht vermieden werden, denn es hatten sich Vulkanisatteilchen gebildet. Dies bedeutete nicht nur ein mangelhaftes Produkt, denn bei der nachfolgenden Verarbeitung der Fässer verstopften Leitungssysteme und Dosiervorrichtungen. Dadurch waren umfangreiche und kostenintensive Reinigungsarbeiten nötig, die zusätzlich ungewollte Maschinenstillstände bewirkten.
Zusätzlich wies das Material in den Fässer Lufteinschlüsse auf, die ebenfalls die Weiterverarbeitung sehr stark behinderte.

## Patentansprüche

1. Verfahren zur Herstellung von vernetzbaren Massen auf der Basis von Organopolysiloxanen durch Vermischen der einzelnen Bestandteile, **dadurch gekennzeichnet, dass** die Mischung (1) kontinuierlich durch eine Zuleitung einem mit mindestens einer Pressplatte versehenen Speicher zugeführt wird, wobei der Speicher eine Speicherkapazität von mindestens 15 Minuten der kontinuierlich zugeführten Mischung (1) hat sowie der im Wesentlichen totraumfreie Speicher beim Befüllen dauerhaft einen Innendruck von mehr als 1200 hPa aufweist, und über einen Austrag weiteren Behältern zugeführt wird.

2. Verfahren gemäß Anspruch 1, **dadurch gekennzeichnet, dass** Mischung (1) eine Viskosität von über 10 Pa·s bei 25°C hat.

3. Verfahren gemäß Anspruch 1 oder 2, **dadurch gekennzeichnet, dass** der Quotient aus Länge und Durchmesser des Speichers Werte von 0,2 bis 5 aufweist.

4. Verfahren gemäß einem oder mehreren der Ansprüche 1 bis 3, **dadurch gekennzeichnet, dass** der Innendruck des im Wesentlichen totraumfreien Speichers beim Befüllen dauerhaft 1500 bis 10000 hPa beträgt.

5. Verfahren gemäß einem oder mehreren der Ansprüche 1 bis 4, **dadurch gekennzeichnet, dass** der Innendruck des im Wesentlichen totraumfreien Speichers beim Entleeren bevorzugt 2500 bis 50000 hPa beträgt.

6. Verfahren gemäß einem oder mehreren der Ansprüche 1 bis 5, **dadurch gekennzeichnet, dass** der Speicher bis zu weniger als 10 % seines Volumens restentleert werden kann.

7. Verfahren gemäß einem oder mehreren der Ansprüche 1 bis 6, **dadurch gekennzeichnet, dass** die Entleerung des Speichers mit mehr als 1000 Litern je Stunde erfolgt.

8. Verfahren gemäß einem oder mehreren der Ansprüche 1 bis 7, **dadurch gekennzeichnet, dass** der Volumenstrom der Entleerung ist bevorzugt um den Faktor 1,1 größer ist als der Volumenstrom der Mischung (1).

9. Verfahren gemäß einem oder mehreren der Ansprüche 1 bis 8, **dadurch gekennzeichnet, dass** die Speicherkapazität 45 bis 300 Minuten der kontinuierlich zugeführten Mischung (1) beträgt.

## Claims

1. Process for producing crosslinkable compositions based on organopolysiloxanes by mixing of the individual constituents, **characterized in that** the mixture (1) is continuously fed via a feed line into a storage provided with at least one pressing plate, with the storage having a storage capacity of at least 15 minutes for the mixture (1) which is continuously fed in and the essentially dead-space-free storage continually having an internal pressure of more than 1200 hPa during filling, and is fed via an outlet to further containers.

2. Process according to Claim 1, **characterized in that** the mixture (1) has a viscosity above 10 Pa·s at 25°C.

3. Process according to Claim 1 or 2, **characterized in that** the ratio of length to diameter of the storage is from 0.2 to 5.

4. Process according to one or more of Claims 1 to 3, **characterized in that** the internal pressure in the essentially dead-space-free storage during filling is always from 1500 to 10 000 hPa.

5. Process according to one or more of Claims 1 to 4, **characterized in that** the internal pressure in the essentially dead-space-free storage during emptying is preferably from 2500 to 50 000 hPa.

6. Process according to one or more of Claims 1 to 5, **characterized in that** the storage can be emptied to leave less than 10% of its volume.

7. Process according to one or more of Claims 1 to 6, **characterized in that** the storage is emptied at a rate of more than 1000 liters per hour.

8. Process according to one or more of Claims 1 to 7, **characterized in that** the volume flow during emptying is preferably a factor of 1.1 greater than the volume flow of the mixture (1).

9. Process according to one or more of Claims 1 to 8, **characterized in that** the storage capacity is from 45 to 300 minutes for the mixture (1) which is continuously fed in.

## Revendications

1. Procédé de fabrication de matières réticulables à base d'organopolysiloxanes par mélange des constituants individuels, **caractérisé en ce que** le mélange (1) est introduit en continu par une alimentation d'un réservoir muni d'au moins une plaque de compactage, le réservoir ayant une capacité de stockage d'au moins 15 minutes du mélange (1) introduit en continu et le réservoir sensiblement exempt de volumes morts présentant en permanence pendant le remplissage une pression interne supérieure à 1 200 hPa, et transféré par une sortie vers d'autres contenants.

2. Procédé selon la revendication 1, **caractérisé en ce que** le mélange (1) a une viscosité supérieure à 10 Pa.s à 25 °C.

3. Procédé selon la revendication 1 ou 2, **caractérisé en ce que** le quotient de la longueur et du diamètre du réservoir présente des valeurs de 0,2 à 5.

4. Procédé selon une ou plusieurs des revendications 1 à 3, **caractérisé en ce que** la pression interne du réservoir sensiblement exempt de volumes morts pendant le remplissage est en permanence de 1 500 à 10 000 hPa.

5. Procédé selon une ou plusieurs des revendications 1 à 4, **caractérisé en ce que** la pression interne du réservoir sensiblement exempt de volumes morts pendant le vidage est de préférence de 2 500 à 50 000 hPa.

6. Procédé selon une ou plusieurs des revendications 1 à 5, **caractérisé en ce que** le réservoir peut être vidé jusqu'à moins de 10 % de son volume.

7. Procédé selon une ou plusieurs des revendications 1 à 6, **caractérisé en ce que** le vidage du réservoir a lieu avec plus de 1 000 litres par heure.

8. Procédé selon une ou plusieurs des revendications 1 à 7, **caractérisé en ce que** le débit volumique du vidage est de préférence supérieur d'un facteur de 1,1 au débit volumique du mélange (1).

9. Procédé selon une ou plusieurs des revendications 1 à 8, **caractérisé en ce que** la capacité du réservoir est de 45 à 300 minutes du mélange (1) introduit en continu.
